# EUROPEAN PATENT SPECIFICATION

(11) **EP 2 184 654 B1**
(45) Date of publication and mention of the grant of the patent: **20.09.2017**
(21) Application number: 08168494.6
(22) Date of filing: 06.11.2008
(51) Int. Cl.: G05B 13/02

(54) **Method and system for controlling an industrial process**
Verfahren und System zur Steuerung eines Industrieprozesses
Procédé et système de contrôle d'un procédé industriel

(43) Date of publication of application: 12.05.2010
(73) Proprietor: ABB Research Ltd., 8050 Zürich (CH)
(72) Inventor: Gallestey Alvarez, Eduardo, 5522 Tägerig (CH); Brooks, John, GB-Sidcup Kent DA14 4LD (GB); Taylor, Ross, Gravesend Kent DA12 5ED (GB); Poland, Jan, 5400 Baden (CH); Stadler, Konrad, 8166 Niederweningen (CH)
(74) Representative: ABB Patent Attorneys

(56) References cited:
- EP-A- 0 435 339
- EP-A- 0 481 492
- GB-A- 2 264 369
- US-A- 5 452 200
- US-A- 5 995 532

## Description

### FIELD OF THE INVENTION

The present invention relates to a system and a control method for controlling an industrial process. Specifically, the invention relates to a system and a control method for controlling an industrial process, by calculating in a controller manipulated variables for controlling the process based on process variables.

### BACKGROUND OF THE INVENTION

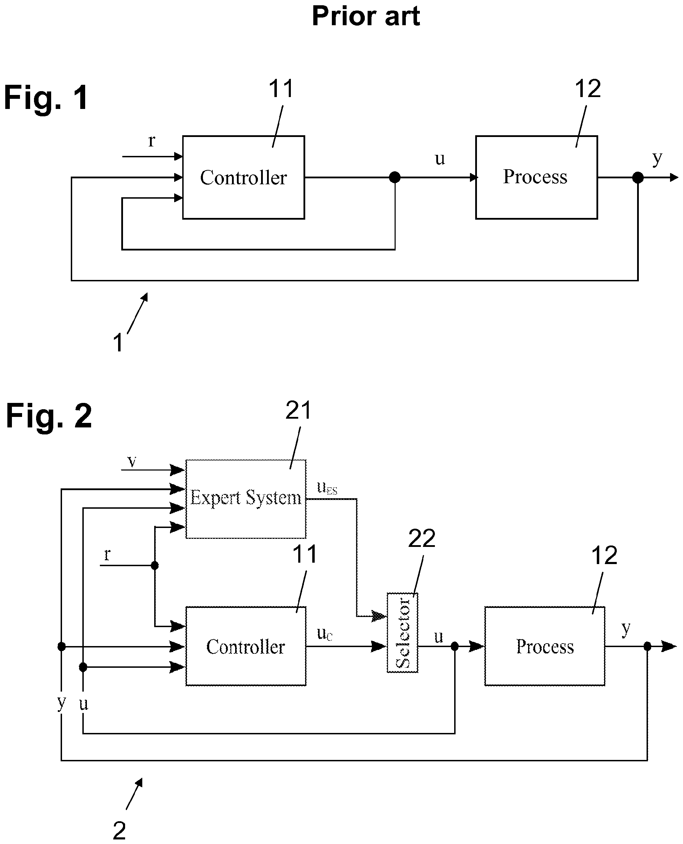

Fig. 1 illustrates a conventional closed-loop control system 1 for controlling an industrial process 12 such as operating a kiln, particularly a rotary cement kiln, a mill of a grinding system, e.g. a wet grinding process, a digester in Aluminum or Pulp and Paper production, networks of boilers and other steam generators with gas and steam turbines, steam/heat consumers such as heat exchangers and district heating, or smelters and acid plants in the metal and steal industry. The control system 1 includes a conventional controller 11 based on any classical control algorithm, such as PID (Proportional Integral Derivative) control, model based techniques, or optimal and predictive control algorithms, such as model predictive control (MPC). Considering a feedback of process variables *y*, the controller 11 calculates manipulated variables *u* for controlling the process 12, as specified by operating targets *r* (set-points). Particularly in real-life industrial settings with extreme and sudden changes of conditions, the process 12 may move into operating conditions outside the operating range for which the controller was designed. Upon occurrence of such conditions, the controller should provide different outputs *u* to counteract the situation, and stabilize the system by moving it back into the manageable operating range.

For example, in the process of operating kilns in the cement production, an extreme and sudden change of conditions is caused by a "coating drop" or "ring", when up to two tons of coating dislodge from the refractory lining and fall onto the bed. This upsets the calcining and sintering reactions, causing rapid, drastic temperature changes in the kiln. It can disrupt normal clinker processing for several minutes, and a recovery from such a disruption may take up to three hours.

In combustion control of a kiln, variables such as the speed of an ID-fan (induced draft) or fuel-flow are manipulated primarily to control O₂, assuming that the physical model of the MPC controller does not take into account levels of CO concentration. When CO rises above a specified threshold constraint, CO will override and become the controlled variable. It is thus necessary, to have the controller tuned to heavily penalize high CO values, steer the CO back into an acceptable operating region, and rapidly return to O₂ control.

Consequently, there is a need for a control system which reacts appropriately and returns operations to the designed operating range where conventional controllers operate again properly, in cases where specific process critical operating conditions occur and/or the conventional controller, e.g. a model predictive control system, moves outside its defined operating range.

In classical control theory, there is the notion of 'override' control for systems having several nested conventional controllers of the same type (e.g. PID controllers). Typically, however, this type of conventional override control is limited to applying a minimum function min(u1, u2), a maximum function max(u1, u2), or a combination thereof to the output values provided by the nested controllers. Document EP 0 435 339 A2 describes a compound control method in which a conventional PID controller can override a fuzzified PID controller when the stability of the system becomes more important than the responsiveness of the controller.

### DESCRIPTION OF THE INVENTION

It is therefore an objective of the present invention to provide a control system and a control method suitable for controlling an industrial process in a real plant situation where extreme changes of conditions may move a conventional controller into operating conditions outside its designed operating range. Particularly, it is an objective of the present invention to provide a control system and a control method which reacts upon extreme changes of operating conditions, and returns operations to the designed operating range of a conventional controller.

At least some of these objectives are achieved by a control system for controlling an industrial process according to claim 1, and a control method for controlling an industrial process according to claim 12. Further preferred embodiments are evident from the dependent claims.

For controlling an industrial process, a controller is configured to calculate, based on process variables, manipulated variables for controlling the process. Particularly, the controller is based on Model Predictive Control.

According to the present invention, the above-mentioned objects are particularly achieved in that an expert system determines output values for controlling the process, and, based on operating conditions of the process, a selector selects either the manipulated variables or the output values for controlling the process. For example, the expert system is based on fuzzy logic and/or a set of defined rules. In different embodiments, the selector is configured to select the manipulated variables or the output values using an expert system, or a trained classifier based on a neuronal network, a support vector machine or a decision tree. Using an expert system to interrupt a conventional controller from controlling an industrial process has the advantage that a much broader range of operating conditions and emergency situations can be handled than with the conventional controller, and a wide range of predefined actions or sequences of actions can be triggered to return process operations to a designed operating range of the conventional controller. Thus, the combination of a conventional controller with an overriding expert system makes it possible to stabilize highly uncertain, nonlinear and dynamic industrial processes, such as a cement clinker production process in a rotary kiln.

In an embodiment, the expert system includes a plurality of sub-expert modules each configured to determine output values for controlling the process. Accordingly, the selector is further configured to select, based on the operating conditions of the process, either the output values determined by a selected one of the sub-expert modules or the manipulated variables calculated by the controller, for controlling the process.

In a further embodiment, at least one further controller calculates, based on process variables, manipulated variables for controlling the process. Accordingly, the selector is further configured to select, based on the operating conditions of the process, either the output values determined by a selected one of the sub-expert modules or the manipulated variables calculated by a selected one of the controllers, for controlling the process.

In another embodiment, the sub-expert modules are hierarchically prioritized, and the selector is further configured to select the output values determined by one of the sub-expert modules, based on the priority of the respective sub-expert module.

Preferably, the expert system or the sub-expert modules, respectively, are further configured to determine a specific predefined action or a sequence of predefined actions, based on defined rules, and to provide signals for triggering the determined actions.

In another embodiment, the expert system or the sub-expert modules, respectively, are further configured to determine parameter values for the controller(s), based on defined rules, and to provide the parameter values for setting up the controller(s).

Depending on the embodiment, the expert system is configured to determine the operating conditions of the process based on process variables, manipulated variables, manual operator inputs, and/or estimated model states provided by an observer module, for example.

### BRIEF DESCRIPTION OF THE DRAWINGS

The present invention will be explained in more detail, by way of example, with reference to the drawings in which:
Fig. 1 shows a block diagram illustrating a conventional closed-loop control system for controlling an industrial process,
Fig. 2 shows a block diagram illustrating an example of a control system according to the invention for controlling an industrial process, the system comprising an expert system and a selector in addition to the standard controller,
Fig. 3 shows a block diagram illustrating a further example of a control system according to the invention for controlling an industrial process, the system comprising an expert system with several sub-expert modules in addition to the standard controller.

### DETAILED DESCRIPTION OF PREFERRED EMBODIMENTS

As described earlier with reference to Fig. 1, reference numeral 1 refers to a conventional closed-loop control system 1 comprising a standard controller 11 for controlling an industrial process 12.

In Fig. 2, reference numeral 2 refers to a control system according to the invention for controlling an industrial process 12. Examples of different industrial process 12 were described in the introduction with reference to Fig. 1.

The control system 2 is a closed loop control system comprising a standard controller 11 based on linear or nonlinear control techniques such as PID, Linear Quadratic Regulator (LQR) with or without observer or Kalman filter, Internal Model Control (IMC), H2-Control, sliding mode, and specifically MPC. The controller 11 calculates a set of manipulated variables *u_{C}* for controlling the process 12, based on specified operating targets *r* (set-points) and feedback of process variables y as well as of the manipulated variables u.

The control system 2 further includes an expert system 21 and a selector 22. Depending on the embodiment, selector 22 is part of the expert system 21 or simply controlled by the expert system 21.

As illustrated in Fig. 2, feedback of the process variables *y* and of the manipulated variables *u* is not only provided to the controller 11, but also to the expert system 21. Furthermore, the operating targets *r* (set-points) are supplied to the controller 11 and the expert system 21. Moreover, provided to the expert system 21 is additional information *v* from other sources, such as manual operator entries, e.g. for triggering specific actions.

The expert system 21 is configured to determine a set of output values *u_{ES}* for controlling the process 12. The selector 22 is configured to select , for controlling the process 12, either the manipulated variables *u_{C}* provided by the controller 11, or the output values *u_{ES}* provided by the expert system 21, based on current and/or passed operating conditions of the process 12. In essence, the selector 22 is configured to actually switch or alternate between the controller 11 and the expert system 21. Thus, upon detection of specific operating conditions of the process 12, the controller 11, particularly an MPC based controller 11, is overruled by the expert system 22. In other words, the control system 2 provides a closed-loop control system that is interrupted by an expert system 22, upon occurrence of specific operating conditions of the process 12.

Based on defined rules, the expert system 21 models the behavior of the "best" human operator of the system. This means that, if a specific (e.g. dangerous) condition occurs, a model operator has a specific way to force the system towards stable operating conditions. For example, the expert system 21 is implemented as a fuzzy logic based system, which translates a set of linguistic rules into a nonlinear control algorithm providing the output values *u_{ES}* for controlling the process 12. Alternatively, a standard operating procedure is mapped onto rules of the expert system 12, and the expert system 12 determines output values *u_{ES}* including signals for triggering not only a single predefined action at a certain time instance, but a predefined sequence of predefined actions over many sampling instances, for example, *"immediately reduce fuel for 4 minutes, after that reduce feed by 2tons*/*hour".* In a further embodiment, the expert system 21 is further configured to determine, based on defined rules, parameter values for the controller 11, for instance, parameters such as time varying ramp constraints, maximum and minimum values for specific actuators, or set-points of the controlled variables. Accordingly, the output values *u_{ES}* include the parameter values for setting up the controller 11 as determined by the expert system 21.

For determining the operating conditions of the process 12, the expert system 12 relies on process variables *y*, manipulated variables *u*, and/or additional information *v* from other sources such as manual operator input.

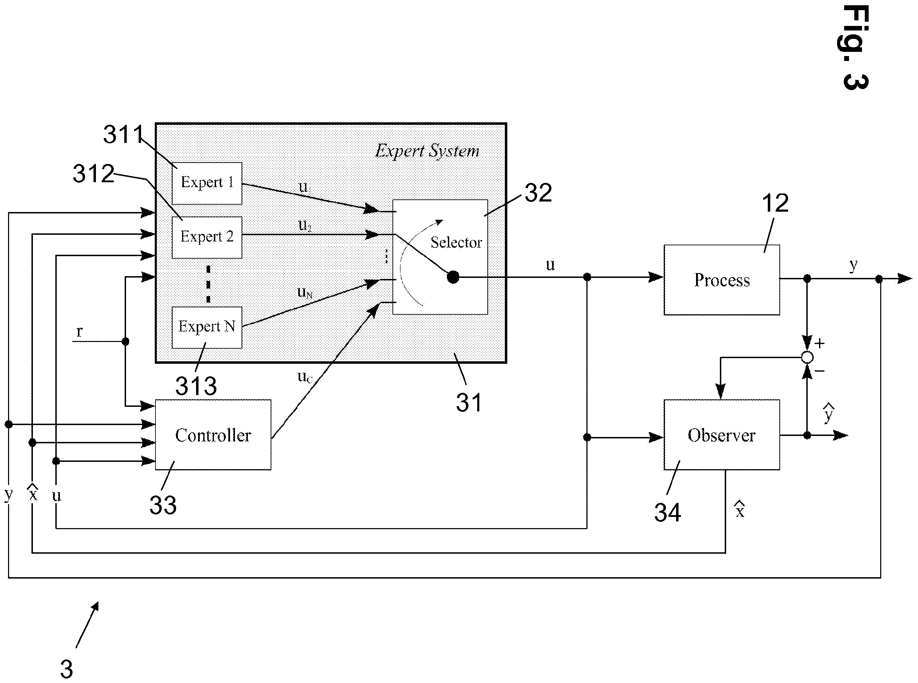

In Fig. 3, reference numeral 3 refers to a more detailed example of the control system according to the invention for controlling the industrial process 12. The control system 3 is based on closed loop control with a standard controller 33, preferably a model based control loop, and further comprises an observer module 34 for state estimation. The observer module 34 is configured to determine the estimated model states *x̂* of the process 12 based on the process variables *y* and the manipulated variables *u.* The controller 33 is configured to calculate manipulated variables *u_{C}* for controlling the process 12, based on specified operating targets *r* (set-points), feedback of process variables *y* as well as of the manipulated variables *u*, and/or the estimated model states *x̂* of the process 12. The expert system 31 is configured to determine the operating conditions of the process 12 not only based on process variables *y*, manipulated variables *u*, and/or additional information *v*, but also the estimated model states *x̂* of the process 12. In a further embodiment, not illustrated, the control system 3 comprises more than one standard controller, each configured to calculate manipulated variables for controlling the process 12.

As illustrated in Fig. 3, the expert system 31 includes a selector 32 and more than one sub-expert modules 311, 312, 313, each configured to determine sets of output values *u₁, u₂, u_{N}* and trigger one or more defined actions for controlling the process 12, as described above in the context of Fig. 2. Thus, depending on the operating conditions, the sub-expert modules 311, 312, 313 trigger different types of actions and/or set parameter values for the standard controller(s) 31 for controlling the process 12 and returning operation of the process to a designed operating range of the standard controller 33.

The expert system 31 or the selector 32, respectively, is configured to select, for controlling the process 12, either the manipulated variables *u_{C}* provided by the controller 33, the manipulated variables provided by another standard controller not illustrated, or a selected set of output values *u₁, u₂, u_{N}* provided by one of the sub-expert modules 311, 312, 313, based on current and/or passed operating conditions of the process 12. Thus, the expert system 31 or the selector 32, respectively, is configured to switch or alternate between the controller 33, another standard controller not illustrated, and one of the sub-expert modules 311, 312, 313.

In an embodiment, assigned to each of the sub-expert modules 311, 312, 313 is a different priority and the expert system 31 or the selector 32, respectively, is configured to select one of the sub-expert modules 311, 312, 313, based on their respective hierarchical priorities. Thus, upon detection of specific operating conditions of the process 12 and in accordance with the respective priority, the expert system 31 interrupts the default standard controller 31 by switching to manipulated variables calculated by an alternative standard controller, not illustrated, or to output values *u₁, u₂, u_{N}* of one of the sub-expert modules 311, 312, 313 for controlling the process 12. In one embodiment of implementing the interrupt mechanism, the default standard controller 33 is usually active and is only interrupted when a specific operating condition occurs which triggers one or more sub-expert module 311, 312, 313. In an alternative embodiment of implementing the interrupt mechanism, prior to enabling the default standard controller 33, the operating conditions are evaluated by the sub-expert modules 311, 312, 313 in descending order of their respective priorities. Nevertheless, a selected sub-expert module 311, 312, 313 triggers a predefined action at a certain time instance, or a predefined sequence of predefined actions over many sampling instances, blocking the standard controller 33, alternative standard controllers and/or any sub-expert module 311, 312, 313 with a lower priority.

The controller 11, the expert system 21, 31 (including the sub-expert modules 311, 312, 313), the selector 22, 32 and the observer module 33 are logic modules implemented as programmed software modules for controlling a processor. One skilled in the art will understand, however, that these logic modules can also be implemented fully or partly by hardware elements.

For example, the industrial process 12 relates to operating a rotary kiln, and the operating conditions of the process 12 are determined by the expert system 21, 31 based on the status of the current and former behavior of kiln signals, such as current and past values of the kiln motor power, a gas analysis, temperature indicators, and/or chemistry analysis; and/or based on actions performed on actuators, such as a fuel actuator, a damper position actuator, a rotational speed actuator and/or a feed rate actuator.

In another example, the industrial process 12 relates to operating a mill, and the operating conditions of the process 12 are determined by the expert system 21, 31 based on the status of the current and former behavior of mill signals, such as current and past values of at least one of mill motor power, gas temperature analysis, temperature indicators, mineralogical and chemistry analysis, and /or particle size analysis; and/or based on actions performed on a rotational speed actuator, a fresh feed rate actuator, a water addition rate actuator and/or a damper positions actuator.

It should be noted that in alternative embodiments, the selector 22, 32 is configured to select the manipulated variables *u_{C}* or the output values *u_{ES}, u₁, u₂, u_{N}* using a trained classifier based on a neuronal network, a support vector machine and/or a decision tree, or using an expert system based on model predictions.

## Claims

1. A control system (2, 3) for controlling an industrial process (12), the system comprising:
a controller (11, 33) with a designed operating range, configured to calculate, based on process variables (y), manipulated variables (u_{C}) for controlling the process (12); and
a selector
**characterized in that** the system further comprises
an expert system (21, 31) configured to determine output values (u_{ES}, u₁, u₂, u_{N}) for controlling the process (12), wherein
the expert system (21, 31) is implemented as a fuzzy logic based system; and
wherein
the selector is configured to select, based on operating conditions of the process (12), either the manipulated variables (u_{C}) in case of operating conditions of the process (12) being inside of the designed operating range of the controller (11, 33) or the output values (u_{ES}, u₁, u₂, u_{N}), for controlling the process (12) in case of operating conditions of the process (12) being outside of the designed operating range of the controller (11, 33).

2. The system according to claim 1, wherein the expert system (21, 31) includes a plurality of sub-expert modules (311, 312, 313) each configured to determine output values (u₁, u₂, u_{N}) for controlling the process (12); and the selector (32) is further configured to select, based on the operating conditions of the process (12), either the output values (u₁, u₂, u_{N}) determined by a selected one of the sub-expert modules (311, 312, 313) or the manipulated variables (u_{C}) calculated by the controller (33), for controlling the process (12).

3. The system according to claim 2, wherein the system comprises at least one further controller configured to calculate, based on process variables (y), manipulated variables (u_{C}) for controlling the process (12); and the selector (32) is further configured to select, based on the operating conditions of the process (12), either the output values (u₁, u₂, u_{N}) determined by a selected one of the sub-expert modules (311, 312, 313) or the manipulated variables calculated by a selected one of the controllers, for controlling the process (12).

4. The system according to one of claims 2 or 3, wherein the sub-expert modules (311, 312, 313) are hierarchically prioritized; and the selector (32) is further configured to select the output values (u₁, u₂, u_{N}) determined by one of the sub-expert modules (311, 312, 313), based on the priority of the respective sub-expert module (311, 312, 313).

5. The system according to one of claims 1 to 4, wherein the expert system (21, 31) is further configured to determine one or a sequence of predefined actions, based on defined rules; and the output values (u_{ES}, u₁, u₂, u_{N}) include signals for triggering the predefined actions determined by the expert system (21, 31).

6. The system according to one of claims 1 to 5, wherein the expert system (21, 31) is further configured to determine parameter values for the controller (11, 33), based on defined rules; and the output values (u_{ES}, u₁, u₂, u_{N}) include the parameter values for setting up the controller (11, 33) as determined by the expert system (21, 31).

7. The system according to one of claims 1 to 6, wherein the selector (22, 32) is configured to select the manipulated variables (u_{C}) or the output values (u_{ES}, u₁, u₂, u_{N}) using at least one of an expert system (21, 31), a neuronal network based trained classifier, a support vector machine based trained classifier, and a decision tree based trained classifier.

8. The system according to one of claims 1 to 7, wherein the system further comprises an observer module (34) configured to determine estimated model states (*x̂*) of the process (12); and the expert system (21, 31) is configured to determine the operating conditions of the process (12) based on the estimated model states (*x̂*).

9. The system according to one of claims 1 to 8, wherein the expert system (21, 31) is configured to determine the operating conditions of the process (12) based on at least one of process variables (y), manipulated variables (u_{C}), estimated model states (*x̂*), and manual operator inputs (v).

10. The system according to one of claims 1 to 9, wherein the controller (11, 33) is based on Model Predictive Control.

11. The system according to one of claims 1 to 10, wherein the expert system (21, 31) is based on at least one of fuzzy logic and defined rules.

12. A control method for controlling an industrial process (12), the method comprising:
calculating by a controller (11, 33), based on process variables (y), manipulated variables (u_{C}) for controlling the process (12);
**characterized in that** the method further comprises
determining by an expert system (21, 31) output values (u_{ES}, u₁, u₂, u_{N}) for controlling the process (12) and wherein the expert system (21, 31) is implemented as a fuzzy logic based system; and
selecting, based on operating conditions of the process (12), either the manipulated variables (u_{C}) in case of operating conditions of the process (12) being inside of the designed operating range of the controller (11, 33) or the output values (u_{ES}), for controlling the process (12) in case of operating conditions of the process (12) being outside of the designed operating range of the controller (11, 33).

13. The method according to claim 12, wherein determining the output values (u₁, u₂, u_{N}) for controlling the process (12) is performed by a plurality of sub-expert modules (311, 312, 313); and the method further comprises selecting, based on the operating conditions of the process (12), either the output values (u₁, u₂, u_{N}) determined by a selected one of the sub-expert modules (311, 312, 313) or the manipulated variables (u_{C}) calculated by the controller (11, 33), for controlling the process (12).

14. The method according to claim 13, wherein calculating the manipulated variables for controlling the process (12) is performed by more than one controller; and the method further comprises selecting, based on the operating conditions of the process (12), either the output values (u₁, u₂, u_{N}) determined by a selected one of the sub-expert modules (311, 312, 313) or the manipulated variables calculated by a selected one of the controllers, for controlling the process (12).

15. The method according to one of claims 12 to 14, wherein the manipulated variables (u_{C}) or the output values (u_{ES}, u₁, u₂, u_{N}) are selected using at least one of an expert system (21, 31), a neuronal network based trained classifier, a support vector machine based trained classifier, and a decision tree based trained classifier.

## Patentansprüche

1. Steuersystem (2, 3) zum Steuern eines industriellen Prozesses (12), wobei das System Folgendes umfasst:
eine Steuereinheit (11, 33) mit einem ausgelegten Betriebsbereich, die konfiguriert ist, anhand von Prozessvariablen (y) Stellgrößen (u_{C}) zum Steuern des Prozesses (12) zu berechnen; und
eine Auswahleinrichtung;
**dadurch gekennzeichnet, dass** das System ferner Folgendes umfasst:
ein Expertensystem (21, 31), das konfiguriert ist, Ausgangswerte (u_{ES}, u₁, u₂, u_{N}) zum Steuern des Prozesses (12) zu bestimmen, wobei
das Expertensystem (21, 31) als ein auf Fuzzy-Logik beruhendes System implementiert ist; und wobei
die Auswahleinrichtung konfiguriert ist, anhand von Betriebsbedingungen des Prozesses (12) entweder die Stellgrößen (u_{C}) in dem Fall, in dem die Betriebsbedingungen des Prozesses (12) innerhalb des ausgelegten Betriebsbereichs der Steuereinheit (11, 33) liegen, oder die Ausgangswerte (u_{ES}, u₁, u₂, u_{N}) in dem Fall, in dem die Betriebsbedingungen des Prozesses (12) außerhalb des ausgelegten Betriebsbereichs der Steuereinheit (11, 33) liegen, zum Steuern des Prozesses auszuwählen.

2. System nach Anspruch 1, wobei das Expertensystem (21, 31) mehrere Unterexpertenmodule (311, 312, 313) enthält, die jeweils konfiguriert sind, Ausgangswerte (u₁, u₂, u_{N}) zum Steuern des Prozesses (12) zu bestimmen; und die Auswahleinrichtung (32) ferner konfiguriert ist, anhand der Betriebsbedingungen des Prozesses (12) entweder die Ausgangswerte (u₁, u₂, u_{N}), die durch ein ausgewähltes der Unterexpertenmodule (311, 312, 313) bestimmt werden, oder die Stellgrößen (u_{ES}), die durch die Steuereinheit (33) berechnet werden, zum Steuern des Prozesses (12) auszuwählen.

3. System nach Anspruch 2, wobei das System zumindest eine weitere Steuereinheit umfasst, die konfiguriert ist, anhand von Prozessvariablen (y) Stellgrößen (u_{C}) zum Steuern des Prozesses (12) zu berechnen; und die Auswahleinrichtung (32) ferner konfiguriert ist, anhand der Betriebsbedingungen des Prozesses (12) entweder die Ausgangswerte (u₁, u₂, u_{N}), die durch ein ausgewähltes der Unterexpertenmodule (311, 312, 313) bestimmt werden, oder die Stellgrößen, die durch eine ausgewählte der Steuereinheiten berechnet werden, zum Steuern des Prozesses (12) auszuwählen.

4. System nach einem der Ansprüche 2 oder 3, wobei die Unterexpertenmodule (311, 312, 313) hierarchisch priorisiert sind; und die Auswahleinrichtung (32) ferner konfiguriert ist, die Ausgangswerte (u₁, u₂, u_{N}), die durch eines der Unterexpertenmodule (311, 312, 313) bestimmt werden, anhand der Priorität des jeweiligen Unterexpertensystems (311, 312, 313) auszuwählen.

5. System nach einem der Ansprüche 1 bis 4, wobei das Expertensystem (21, 31) ferner konfiguriert ist, anhand von definierten Regeln eine vordefinierte Aktion oder eine Folge von vordefinierten Aktionen zu bestimmen; und die Ausgangswerte (u_{ES}, u₁, u₂, u_{N}) Signale enthalten, um die vordefinierten Aktionen, die durch das Expertensystem (21, 31) bestimmt werden, auszulösen.

6. System nach einem der Ansprüche 1 bis 5, wobei das Expertensystem (21, 31) ferner konfiguriert ist, Parameterwerte für die Steuereinheit (11, 33) anhand von definierten Regeln zu bestimmen; und die Ausgangswerte (u_{ES}, u₁, u₂, u_{N}) die durch das Expertensystem (21, 31) bestimmten Parameterwerte zum Einstellen der Steuereinheit (11, 33) enthalten.

7. System nach einem der Ansprüche 1 bis 6, wobei die Auswahleinrichtung (22, 32) konfiguriert ist, die Stellgrößen (u_{C}) oder die Ausgangswerte (u_{ES}, u₁, u₂, u_{N}) unter Verwendung eines Expertensystems (21, 31) und/oder von trainierten Klassifizierern, die auf neuronalen Netzen beruhen, und/oder trainierten Klassifizierern, die auf einer Unterstützungsvektormaschine beruhen, und/oder trainierten Klassifizierern, die auf einem Entscheidungsbaum beruhen, auszuwählen.

8. System nach einem der Ansprüche 1 bis 7, wobei das System ferner ein Beobachtermodul (34) umfasst, das konfiguriert ist, geschätzte Modellzustände (*x̂*) des Prozesses (12) zu bestimmen; und das Expertensystem (21, 31) konfiguriert ist, die Betriebsbedingungen des Prozesses (12) anhand der geschätzten Modellzustände (*x̂*) zu bestimmen.

9. System nach einem der Ansprüche 1 bis 8, wobei das Expertensystem (21, 31) konfiguriert ist, die Betriebsbedingungen des Prozesses (12) anhand von Prozessvariablen (y) und/oder Stellgrößen (u_{C}) und/oder geschätzten Modellzuständen (*x̂*) und/oder manuellen Operatoreingaben (v) zu bestimmen.

10. System nach einem der Ansprüche 1 bis 9, wobei die Steuereinheit (11, 33) auf einer Modellvorhersagesteuerung beruht.

11. System nach einem der Ansprüche 1 bis 10, wobei das Expertensystem (21, 31) auf einer Fuzzy-Logik und/oder definierten Regeln beruht.

12. Steuerverfahren zum Steuern eines industriellen Prozesses (12), wobei das Verfahren Folgendes umfasst:
Berechnen durch eine Steuereinheit (11, 33) von Stellgrößen (u_{C}) zum Steuern des Prozesses anhand von Prozessvariablen (y);
**dadurch gekennzeichnet, dass** das Verfahren ferner Folgendes umfasst:
Bestimmen durch ein Expertensystem (21, 31) von Ausgangswerten (u_{ES}, u₁, u₂, u_{N}) zum Steuern des Prozesses (12), wobei das Expertensystem (21, 31) als ein auf Fuzzy-Logik beruhendes System implementiert ist; und
Auswählen anhand der Betriebsbedingungen des Prozesses (12) entweder der Stellgrößen (u_{C}) in dem Fall, in dem die Betriebsbedingungen des Prozesses (12) innerhalb des ausgelegten Betriebsbereichs der Steuereinheit (11, 33) liegen, oder der Ausgangswerte (u_{ES}) in dem Fall, in dem die Betriebsbedingungen des Prozesses (12) außerhalb des ausgelegten Betriebsbereichs der Steuereinheit (11, 33) liegen, zum Steuern des Prozesses (12).

13. Verfahren nach Anspruch 12, wobei das Bestimmen der Ausgangswerte (u₁, u₂, u_{N}) zum Steuern des Prozesses (12) durch mehrere Unterexpertenmodule (311, 312, 313) ausgeführt wird; und das Verfahren ferner umfasst, anhand der Betriebsbedingungen des Prozesses (12) entweder die Ausgangswerte (u₁, u₂, u_{N}), die durch ein ausgewähltes der Unterexpertenmodule (311, 312, 313) bestimmt werden, oder die Stellgrößen (u_{C}), die durch die Steuereinheit (11, 33) berechnet werden, zum Steuern des Prozesses (12) auszuwählen.

14. Verfahren nach Anspruch 13, wobei das Berechnen der Stellgrößen zum Steuern des Prozesses (12) durch mehr als eine Steuereinheit ausgeführt wird; und das Verfahren ferner umfasst, anhand der Betriebsbedingungen des Prozesses (12) entweder die Ausgangswerte (u₁, u₂, u_{N}), die durch ein ausgewähltes der Unterexpertenmodule (311, 312, 3131) bestimmt werden, oder die Stellgrößen, die durch eine ausgewählte der Steuereinheiten berechnet werden, zum Steuern des Prozesses (12) auszuwählen.

15. Verfahren nach einem der Ansprüche 12 bis 14, wobei die Stellgrößen (u_{C}) oder die Ausgangswerte (u_{ES}, u₁, u₂, u_{N}) unter Verwendung eines Expertensystems (21, 31) und/oder von trainierten Klassifizierern, die auf neuronalen Netzen beruhen, und/oder trainierten Klassifizierern, die auf einer Unterstützungsvektormaschine beruhen, und/oder trainierten Klassifizierern, die auf einem Entscheidungsbaum beruhen, ausgewählt werden.

## Revendications

1. Système de commande (2, 3) pour la commande d'un processus industriel (12), le système comprenant :
une unité de commande (11, 33) dotée d'une plage de fonctionnement nominale, configurée pour calculer, en fonction de variables de processus (y), des variables manipulées (u_{C}) pour la commande du processus (12) ; et
un sélecteur,
le système étant **caractérisé en ce qu'**il comprend en outre
un système expert (21, 31) configuré pour déterminer des valeurs de sortie (u_{ES}, u₁, u₂, u_{N}) pour la commande du processus (12),
le système expert (21, 31) étant mis en oeuvre sous forme d'un système à base de logique floue ; et
le sélecteur étant configuré pour sélectionner, en fonction de conditions de fonctionnement du processus (12), soit les variables manipulées (u_{C}) si les conditions de fonctionnement du processus (12) s'inscrivent dans la plage de fonctionnement nominale de l'unité de commande (11, 33), soit les valeurs de sortie (u_{ES}, u₁, u₂, u_{N}) pour la commande du processus (12) si les conditions de fonctionnement du processus (12) sortent de la plage de fonctionnement nominale de l'unité de commande (11, 33).

2. Système selon la revendication 1, dans lequel le système expert (21, 31) comporte une pluralité de sous-modules experts (311, 312, 313) configurés chacun pour déterminer des valeurs de sortie (u₁, u₂, u_{N}) pour la commande du processus (12) ; et le sélecteur (32) est configuré en outre pour sélectionner, en fonction des conditions de fonctionnement du processus (12), soit les valeurs de sortie (u₁, u₂, u_{N}) déterminées par un sous-module expert sélectionné parmi les sous-modules experts (311, 312, 313), soit les variables manipulées (u_{C}) calculées par l'unité de commande (33), pour la commande du processus (12).

3. Système selon la revendication 2, lequel système comprend au moins une autre unité de commande configurée pour calculer, en fonction de variables de processus (y), des variables manipulées (u_{C}) pour la commande du processus (12) ; et dans lequel le sélecteur (32) est configuré en outre pour sélectionner, en fonction des conditions de fonctionnement du processus (12), soit les valeurs de sortie (u₁, u₂, u_{N}) déterminées par un sous-module expert sélectionné parmi les sous-modules experts (311, 312, 313), soit les variables manipulées calculées par une unité de commande sélectionnée parmi les unités de commande, pour la commande du processus (12).

4. Système selon l'une des revendications 2 ou 3, dans lequel les sous-modules experts (311, 312, 313) sont hiérarchisés par ordre de priorité ; et le sélecteur (32) est configuré en outre pour sélectionner les valeurs de sortie (u₁, u₂, u_{N}) déterminées par un des sous-modules experts (311, 312, 313), en fonction de la priorité du sous-module expert (311, 312, 313) respectif.

5. Système selon l'une des revendications 1 à 4, dans lequel le système expert (21, 31) est configuré en outre pour déterminer une action prédéfinie ou une séquence d'actions prédéfinies, en fonction de règles définies ; et les valeurs de sortie (u_{ES}, u₁, u₂, u_{N}) comportent des signaux pour déclencher les actions prédéfinies déterminées par le système expert (21, 31).

6. Système selon l'une des revendications 1 à 5, dans lequel le système expert (21, 31) est configuré en outre pour déterminer des valeurs de paramètres pour l'unité de commande (11, 33), en fonction de règles définies ; et les valeurs de sortie (u_{ES}, u₁, u₂, u_{N}) comportent les valeurs de paramètres pour la configuration de l'unité de commande (11, 33) telle que déterminée par le système expert (21, 31).

7. Système selon l'une des revendications 1 à 6, dans lequel le sélecteur (22, 32) est configuré pour sélectionner les variables manipulées (u_{C}) ou les valeurs de sortie (u_{ES}, u₁, u₂, u_{N}) à l'aide d'au moins un élément dans le groupe constitué par un système expert (21, 31), un classifieur entraîné à base de réseau neuronal, un classifieur entraîné à base de machine à vecteurs de support et un classifieur entraîné à base d'arbre de décision.

8. Système selon l'une des revendications 1 à 7, lequel système comprend en outre un module observateur (34) configuré pour déterminer des états de modèle estimés (*x̂*) du processus (12) ; et dans lequel le système expert (21, 31) est configuré pour déterminer les conditions de fonctionnement du processus (12) en fonction des états de modèle estimés (*x̂*).

9. Système selon l'une des revendications 1 à 8, dans lequel le système expert (21, 31) est configuré pour déterminer les conditions de fonctionnement du processus (12) en fonction d'au moins un élément dans le groupe constitué par des variables de processus (y), des variables manipulées (u_{C}), des états de modèle estimés (*x̂*) et des entrées manuelles d'opérateur (v).

10. Système selon l'une des revendications 1 à 9, dans lequel l'unité de commande (11, 33) est basée sur une commande prédictive par modèle.

11. Système selon l'une des revendications 1 à 10, dans lequel le système expert (21, 31) est basée sur une logique floue et/ou des règles définies.

12. Procédé de commande pour la commande d'un processus industriel (12), le procédé comprenant l'étape suivante :
calcul, par une unité de commande (11, 33), en fonction de variables de processus (y), de variables manipulées (u_{C}) pour la commande du processus (12) ;
le procédé étant **caractérisé en ce qu'**il comprend en outre les étapes suivantes
détermination, par un système expert (21, 31), de valeurs de sortie (u_{ES}, u₁, u₂, u_{N}) pour la commande du processus, le système expert (21, 31) étant mis en oeuvre sous forme d'un système à base de logique floue ; et
sélection, en fonction de conditions de fonctionnement du processus (12), soit des variables manipulées (u_{C}) si les conditions de fonctionnement du processus (12) s'inscrivent dans la plage de fonctionnement nominale de l'unité de commande (11, 33), soit des valeurs de sortie (u_{ES}) pour la commande du processus (12) si les conditions de fonctionnement du processus (12) sortent de la plage de fonctionnement nominale de l'unité de commande (11, 33).

13. Procédé selon la revendication 12, dans lequel la détermination des valeurs de sortie (u₁, u₂, u_{N}) pour la commande du processus (12) est réalisée par une pluralité de sous-modules experts (311, 312, 313) ; et lequel procédé comprend en outre l'étape de sélection, en fonction des conditions de fonctionnement du processus (12), soit des valeurs de sortie (u₁, u₂, u_{N}) déterminées par un sous-module expert sélectionné parmi les sous-modules experts (311, 312, 313), soit des variables manipulées (u_{C}) calculées par l'unité de commande (11, 33), pour la commande du processus (12).

14. Procédé selon la revendication 13, dans lequel le calcul des variables manipulées pour la commande du processus (12) est réalisé par plus d'une unité de commande ; et lequel procédé comprend en outre l'étape de sélection, en fonction des conditions de fonctionnement du processus (12), soit des valeurs de sortie (u₁, u₂, u_{N}) déterminées par un sous-module expert sélectionné parmi les sous-modules experts (311, 312, 313), soit des variables manipulées calculées par une unité de commande sélectionnée parmi les unités de commande, pour la commande du processus (12).

15. Procédé selon l'une des revendications 12 à 14, dans lequel les variables manipulées (u_{C}) ou les valeurs de sortie (u_{ES}, u₁, u₂, u_{N}) sont sélectionnées à l'aide d'au moins un élément dans le groupe constitué par un système expert (21, 31), un classifieur entraîné à base de réseau neuronal, un classifieur entraîné à base de machine à vecteurs de support et un classifieur entraîné à base d'arbre de décision.
